# EUROPEAN PATENT APPLICATION

(11) **EP 2 135 655 A1**
(43) Date of publication of application: **23.12.2009**
(21) Application number: 09163217.4
(22) Date of filing: 19.06.2009
(51) Int. Cl.: A63H 3/02, A63H 9/00

(54) **Stuffed toy having a rubber core and method of assembly**

(30) Priority: 20.06.2008 US 142884
(71) Applicant: MY Dog LLC, Darien, CT 06820 (US)
(72) Inventor: Mccann, Tom, Weston, CT 06883 (US)
(74) Representative: Ilgart, Jean-Christophe

(57) **Abstract**

The stuffed toy animal (10) of the present invention comprises a head (12), a body (14) to which the head is attached and a plurality of appendages extending from the body representing the limbs of the animal such as legs (15, 16) , arms (17, 18) and tail (19) with the head and each of the appendages forming a cover (26) having an exterior composed of a plush fiber material filled with a stuffing material and further comprising a hollow core (30) enclosing the body for forming a protective shield for the body with the hollow core (30) consisting of an elastomeric material (20)and with each of the appendages extending outwardly there from.

## Description

### TECHNICAL FIELD OF THE INVENTION

This invention relates to a stuffed plush toy simulation of an animal for entertaining a pet.

More specifically the stuffed toy includes a hollow rubber core forming a protective shield which encloses the body of the animal to render the toy more resistant to abuse by a pet and to the method of assembly of the toy animal.

### BACKGROUND ART:

It is not unusual to give a pet a stuffed toy animal with a fabric exterior, preferably of a high pile plush material or a faux fur synthetic material, to entertain the pet. A stuffed animal composed of high pile plush material or faux fur is attractive to a pet because of its fur like appearance and soft constituency which simulates the look and feel of a live animal. Unfortunately, a stuffed plush toy animal bas little tolerance for physical abuse particularly from pulling, tearing arid/or gnawing which is typical of a pet in the possession of a stuffed toy animal with a fabric exterior of a plush or faux fur material composition. In fact, such abuse causes the stuffed animal ta rapidly deteriorate and fail apart in a very short time period. Accordingly, there is a current need far a stuffed toy animal of plush or faux fur material which can tolerate physical abuse expected from s pet and will not fall apart, at least not entirely, even after an extended time period.

### SUMMARY OF INVENTION:

The invention is directed to a stuffed toy of a plush or faux fur material in a shape simulating a given animal comprising a head, a body to which the head is attached and having a plurality of appendages extending from the body representing the limbs of the animal such as legs, arms and a tail with the head and each of the appendages having an exterior composed of a plush or faux fur material filled with a stuffing material and further comprising a hollow core consisting of rubber which encloses the body of the animal for forming a protective shield and with the hollow core having openings through which the head and each of the appendages extend. The rubber core may have any desired shape and may form any desired configuration but is preferably in the shape of a heart. Moreover, it is also preferred for the rubber core to include rubber dimples extending outwardly from at least one or all of the exterior surfaces of the rubber core.

It is also preferred to inject a scent into the toy animal during fabrication and preferably in the body portion or in the vicinity of the body portion of the toy to cause the toy animal to permeate an odor from the body portion or vicinity thereof which will attract the pet to the body portion of the stuffed animal which is protected by the rubber core as opposed to the appendages or head of the stuffed animal.

### BRIEF DESCRIPTION OF DRAWINGS:

FIGURE 1 is a front elevational view of the stuffed toy animal of the present invention constructed in accordance with the present invention;
FIGURE 2 is a plan view of a place of plush fabric material used to form the body of the toy animal showing s reinforced bait attached to or sewn on the inside surface of the place from which the body portion of the toy animal is formed;
FIGURES 3a to 3d illustrates how each of the tail, legs, hands and head of the toy animal is separately prepared and sewn together;
FIGURE 4 shows the tail, legs, hands and head hand sewn to the body place to form a partially assembled unstuffed toy animal covering with open seams adapted for stuffing the animal;
FIGURE 5 shows the partially assembled unstuffed toy animal covering of figure 4 inverted, i.e., turned over so that the plush high piled fabric side of the plush material is exposed visibly on the exterior of the unstuffed toy animal;
FIGURE 6 shows a hollow rubber core for enclosing the body of the toy animal with the hollow rubber core shown oriented to expose openings in the rubber core through which the tail and legs extend; and
FIGURE 7 shows the inverted toy animal of figure 5 assembled in the rubber core of Figure 6 after stuffing the head, body portion, legs and tail respectively with stuffing material.

### DETAILED DESCRIPTION OF INVENTION:

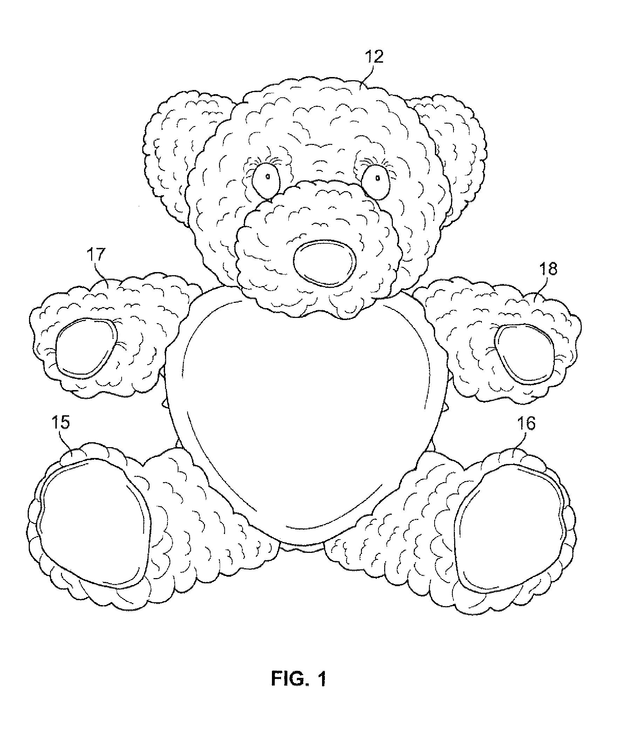

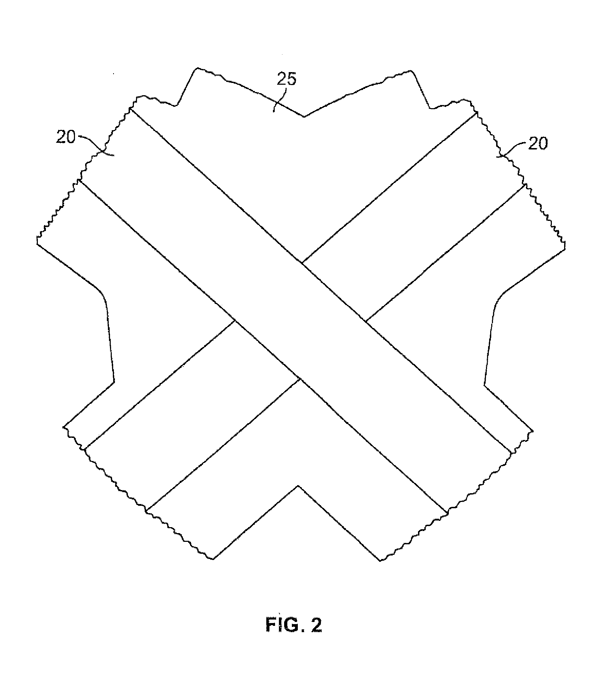

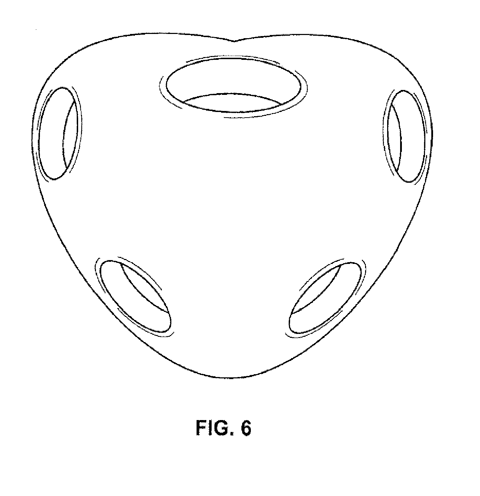

Figure 1 shows the completed stuffed plush toy animal 10 formed in accordance with the present invention and Figures 2-7 illustrate the preferred method for constructing the stuffed toy animal 10 shown in Figure 1.

The stuffed toy animal 10 includes a head 12, e body portion 14 to which the head 12 is attached and appendages represented by limbs 15, 16, 17 and 18 corresponding to legs 15 and 16 and arms 17 end 18, respectively, and a tail 19. The limbs 15,16, 17, 18 and tail 19 are preferably individually formed and connected to the body portion 14, such as by sewing, which results in seams (not shown) at the interconnection of the parts of the toy animal 10. Although the sewing operation is preferably preformed by hand, the limb and head may be sewed to the body by a machine.

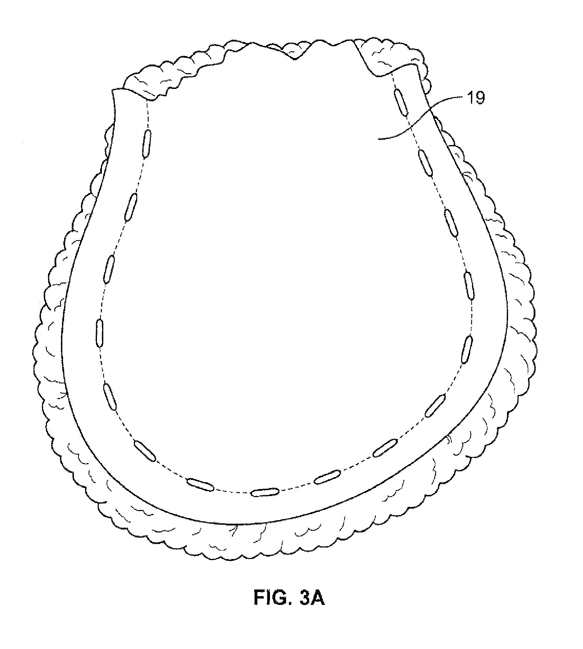

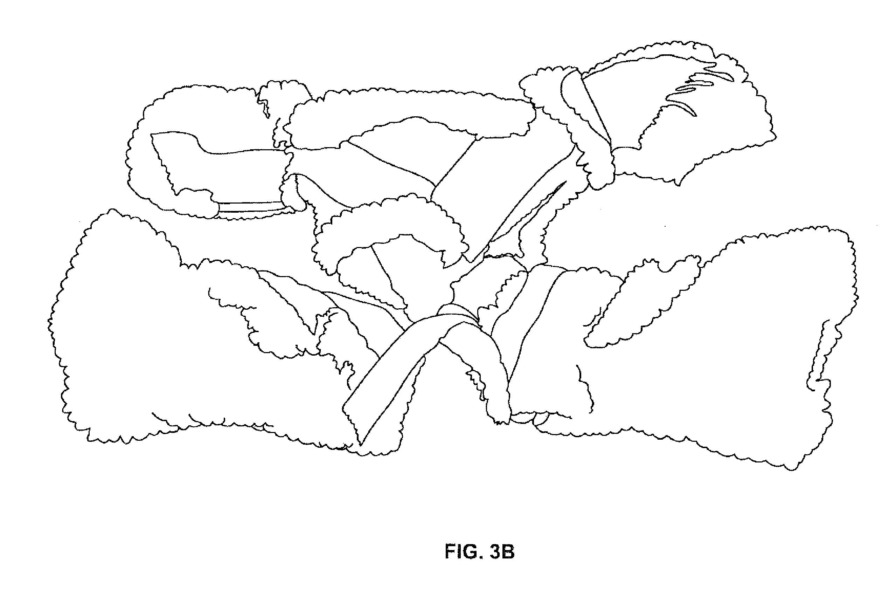

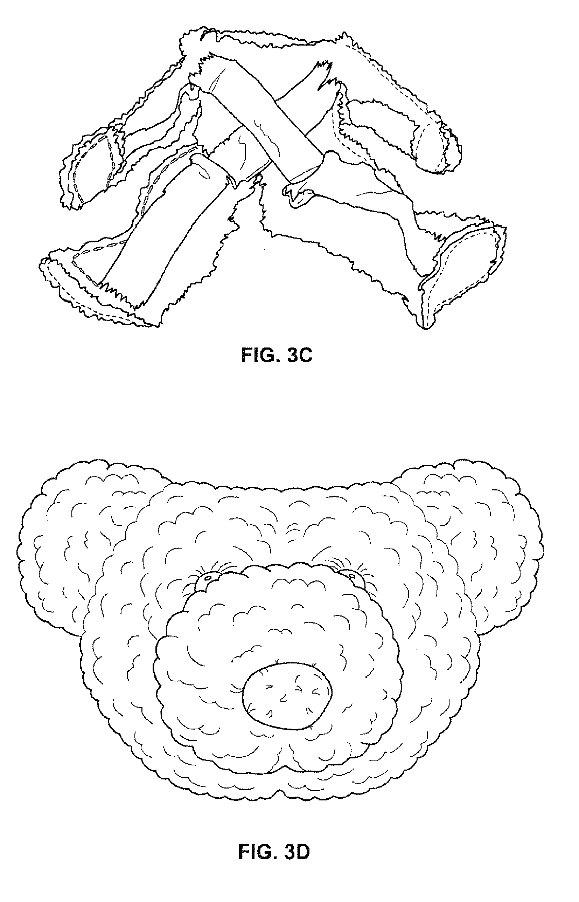

A tape or belt 20, as is shown in figure 3, is preferably applied to each of the seams (not shown) to reinforce the sown connection between the body portion 14 anti each of the limbs 15, 16, 17, 18, head 12 and tail 19, respectively. A section of tape 20 may also be applied to other locations on the body portion 14 and/or to one or more of the appendages and head to reinforce each of them. The tape 20 is preferably composed of nylon although any strong elastomeric natural or synthetic material may be used far reinforcement. The tape 20 may be applied in any conventional fashion to the non-plush underside of a piece 25 of high pile plush fabric composition material used to form the body portion 14 and each of the limbs 15, 16, 17, 18, head 12 and tail 19, respectively.

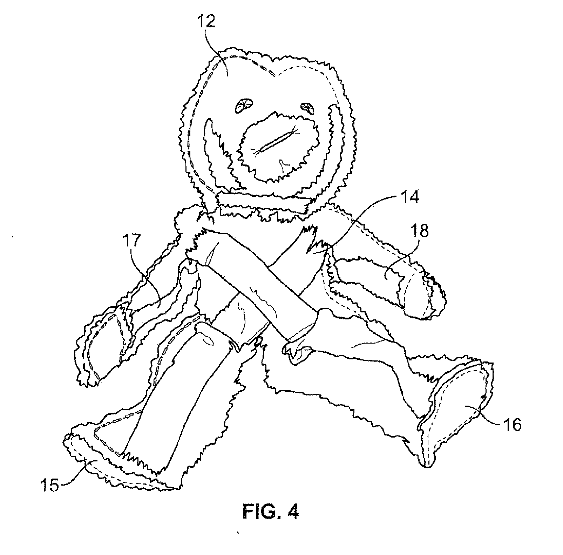

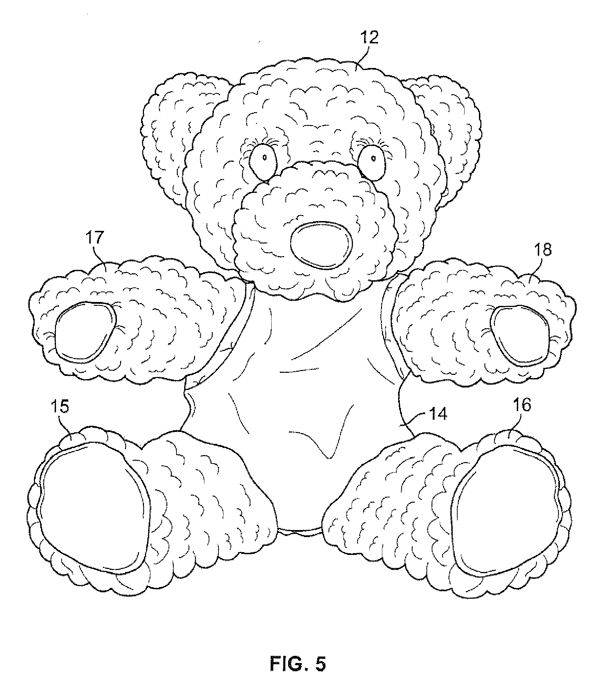

Figure 2 shows a piece 25 of a synthetic fabric material adapted to form the body portion 14 of the animal. To reinforce the body portion 14, strips of nylon tape .20 are sewn onto the body portion 14. The head 12 of the toy animal 10 and each of the appendages including the limbs 15,16, 17 and 18 arms the tail 19 are separately and individually formed and are preferably hand sewn to the body portion 14 so that the seams (not shown) are exposed on the non-plush underside of each piece 25 of plush material. Strips of reinforcement tape 20 are preferably applied to all of the pieces 25 of plush or other faux fur material on the underside, i.e., non-plush side, thereof for reinforcing all of the seams (not shown). In this fashion, when the plush or faux fur fabric pieces 25, representing all of the appendages of the boy animal 10, are interconnected, an inside out cover or covering 26 of plush or faux fur material is formed with the seams (not shown) covered by reinforcement tape 20 exposed on the outside of the cover 26 as shown in figures 4 and 5.

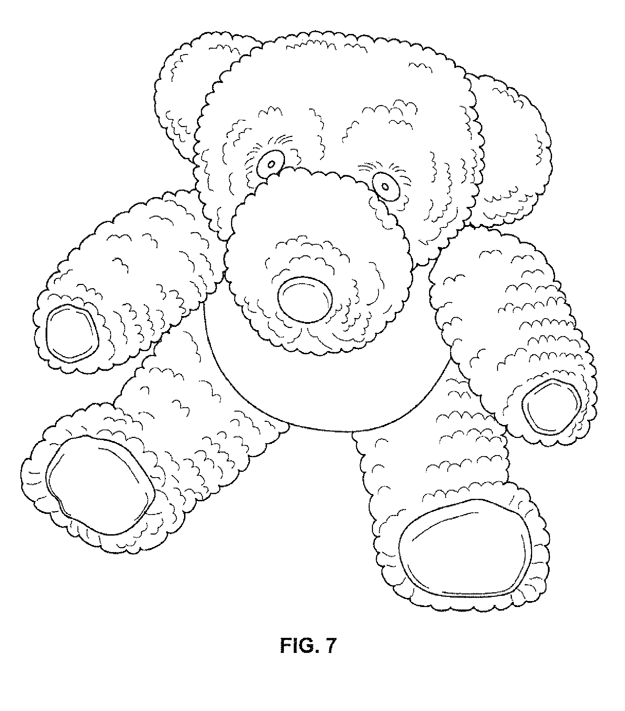

The cover 26 is then passed through a hollow core 30 having openings 31-37 formed therein for each of the respective appendages 15-18, as well as for the head 12 and the bail 19 so that each of the appendages can be pulled out from the body portion 14 to extend from the appropriate one of the respective openings. The hollow core 30 is composed of natural or synthetic rubber with the openings 31-37 formed using e.g. e drill to form a protective shield enclosing the body portion 14 of the toy animal 10. Figure 7 shows the formation of openings 31 • 32 and 33 in the hollow rubber core 30 for the legs 15 and 16 and for the tail 19. The rubber core 30 may be prefabricated into a hollow rubber body in any desired configuration and shape but is preferably formed in the shape of a heart with the openings 31-37 formed thereafter at appropriate locations through which the respective appendages 15-18, as well as the head 12 and tail 19 extend. The rubber core is preferably formed with a multiple number of dimples 35 extending there from. The dimples 35 should be distributed relatively symmetrical over the exterior of the core 30 in any desired arrangement with each of the dimples 35 preferably in a shape forming a miniature heart.

Each of the respective appendages 15-18, as well as the head 12 and tail 19 are separately formed from pieces of plush or faux fur fabric 25 using reinforcing tape 20 at least on the seams (not shown). The legs 15 and 16, tail 19 and arms 17 and 18 may be formed in any order with the legs formed as shown in figure 3b and the hands formed as shown in figure 3c. Thereafter the tail 19, legs 15 and 15 and hands 17 and 18 are attached to the body portion 14 as shown in figure 3d. The head 12 is then sewn on the body portion 14 forming the partially assembled unstuffed cover 26 as shown in figure 4.

The non-plush underside surface of each appendage is shown exposed in figure 4. By turning over the cover, i.e., turning the cover 26 inside out the high pile plush or faux fur aide is exposed as shown in figure 5. As explained above, the cover 26 is then passed through the hollow core 30 so that the head 12, legs 15, 16, arms 17, 18 and tail 19 extends from the body portion 14. Stuffing material such as a polyurethane la then inserted into the head 12 ,body 14, handsl7 and 18 legs 15 and 16 and tail 19 respectively preferably through the open seams (not shown) which are then sewn closed. The legs 15 and 16 may include paws (not shown) which may be hand sewn to the legs 15 and 16. The stuffing is adjusted and the animal trim and finished to form the stuffed plush toy animal 10.

During assembly of the toy animal 10 and preferably prior to pushing and pulling he cover 26 through the hollow core 30 a composition having a perfume like scent of conventional composition, preferably with the scent of a food or meat product is injected or applied to the body portion 14. The composition should preferably have the scent of chicken, beef, milk, or peanut. Once the toy animal 10 is fully assembled, the body portion 14 will then permeate an odor corresponding to the injected scent which will attract the pet animal to the body portion 14.

## Claims

1. A stuffed toy (10) with a fabric exterior of plush or faux fur material in a shape simulating a given animal comprising a head (12), a body (14) to which the head is attached and a plurality of appendages extending from the body representing the limbs of the animals such as legs (15, 16), arms (17, 18) and a tail (19) with the head and each of the appendages forming a cover (26) having an exterior composed of a plush or faux fur fiber material filled with a stuffing material and further comprising a hollow core (30) enclosing the body for forming a protective shield for the body with the hollow core consisting of an elastomeric material (20) and with each of the appendages extending outwardly there from.

2. A stuffed toy (10) with a fabric exterior of plush or faux fur material according to claim 1 wherein the hollow core (30) has openings (31-37) through which the head and each of the other appendages extend.

3. A stuffed toy (10) according to claim 2 wherein the elastomeric material forming the hollow core is composed of naturel or synthetic rubber.

4. A stuffed toy (10) according to claim 3 wherein the hollow core is in a configuration of a heart.

5. A stuffed toy (10) according to claim 4 wherein the hollow core has a multiple number of dimples (35) extending there from.

6. A stuffed toy (10) according to claim 5 wherein each of the dimples has the shape of a miniature heart.

7. A method of forming a stuffed toy having a body portion (14), a head (12)attached to the body portion, and a plurality of appendages extending from the body portion representing the limbs of the toy animal such as legs (15, 16), arms (17, 18) and a tail (19) with the head and each of the appendages forming a cover having an exterior composed of a plush fiber material with the body portion being enclosed within a hollow core (30) composed of an elastomeric rubber like material having openings (31-37) for each of the appendages comprising the steps of forming the body portion and each of the appendages from pieces of fabric having a high pile or faux fur on one side thereof, interconnecting the body portion and each of the appendages, reinforcing the body portion and each of the appendages with strips of nylon (20) to form an inside out cover of plush or faux fur material with the strips of nylon exposed, turning the cover inside out to expose the high pile or faux fur side of the fabric, pulling the cover through the hollow core so that each of the appendages extend from the openings in the hollow core and stuffing the body portion and each of the appendages with stuffing material.

8. A method of forming a stuffed toy (10) according to claim 7 wherein a composition having a perfume like scent of s food or meat product is injected or applied to the body portion to cause the toy animal to permeate an odor corresponding to the injected scent from the body portion there of which will attract a pet animal to the body portion of the toy animal.

9. A method of forming a stuffed toy (10) according to claim 8 wherein said scent is selected from the group of food products consisting of chicken, beef, milk and peanut
